# EUROPEAN PATENT SPECIFICATION

(11) **EP 2 152 110 B1**
(45) Date of publication and mention of the grant of the patent: **03.10.2012**
(21) Application number: 08749219.5
(22) Date of filing: 29.04.2008
(51) Int. Cl.: A43B 7/06, A43B 7/12, A43B 17/08, B29D 35/12, A43B 7/14

(54) **MOULD WITH MOBILE INTERMEDIATE SURFACE**
FORM MIT BEWEGLICHER ZWISCHENFLÄCHE
MOULE À SURFACE INTERMÉDIAIRE MOBILE

(30) Priority: 04.06.2007 IT MC20070114
(43) Date of publication of application: 17.02.2010
(73) Proprietor: EUROSUOLE S.P.A., 62012 Civitanova Marche MC (IT)
(72) Inventor: SENSINI, Andrea, I-62018 Potenza Picena (IT)
(74) Representative: Statti, Francesco
(86) International application number: PCT/EP2008/003460
(87) International publication number: WO 2008/148447

(56) References cited:
- EP-A- 1 604 795
- EP-A- 1 872 924
- WO-A-03/053664
- US-A- 4 072 461

## Description

### Field of invention

The present invention concerns a mould divided into three parts for the direct moulding of a membrane equipped with a series of suction cups having the particular shape of an open hourglass or of bellows or of a cylinder onto a support made of breathable, waterproof or hydrophilic material positioned on the intermediate mobile part of the mould which is pressed against the lower part of the mould during the moulding phase and raised after moulding has been completed thanks to a series of springs that bring it back to its original position permitting automatic removal of the moulded suction cups without damage to their particular shape.

### Background

Currently moulds for thermoplastic materials are composed of two elements: the hollow or lower part on which the shape to be transferred to the molten material poured into it is drawn; the cover or upper part which, after moulding has been completed, opens manually or mechanically in order to allow the removal of the moulded product. A mould composed of three elements is disclosed for example in WO 03/053664.

Having to proceed to the moulding of a membrane for shoe soles equipped with suction cups having the particular shape of an open hourglass or of bellows or of a cylinder and characterised by extreme flexibility and softness, the current moulds do not permit, once moulding has been completed, the removal of the moulded shapes of the said suction cups without breaking or damaging them thus compromising the functionality of the membrane.

### Disclosure of invention

It is an object of the present invention to realise a mould for the moulding of flexible thermoplastic material of a series of extremely flexible suction cups having the shape of an open hourglass or of bellows or of a cylinder for a membrane for shoe soles.

Further, it is an object of the present invention to enable the easy removal from the mould of the series of the membrane's suction cups having the shape of an open hourglass or of bellows or a cylinder after moulding.

Further, it is an object of the present invention to guarantee the perfect functionality of the moulded membrane suction cups having the shape of an hourglass or of bellows or of a cylinder.

Further, it is an object of the present invention to permit the moulding of the membrane with its suction cups preferably having the shape of an open hourglass or of bellows or of a cylinder directly onto the support made of hydrophilic or breathable and waterproof material spaced one from the other in order to make the shoe more comfortable in its overall use and in order to facilitate the perspiration of the foot.

Further, it is an object of the present invention to equip the intermediate mobile part of the mould with a series of grids to prevent the injected thermoplastic material from totally covering the surface of the support made of hydrophilic or breathable and waterproof material.

Further, it is an object of the present invention to ensure that the series of grids realised on the intermediate part of the mould positions the suction cups having the shape of an hourglass or of bellows or of a cylinder at the desired distance one from the other on the hydrophilic breathable and waterproof material so as to increase the breathability of the membrane.

Not the last object of the present invention is to obtain a membrane with suction cups having the shape of an open hourglass or of bellows or of a cylinder to be used as an accessory in shoe soles with technical specifications superior to similar membranes obtained using the moulds currently available on the market today.

These and other objects are achieved by the invention that is the object of the present application which concerns a mould divided into three parts, the upper part of which has the classical function of cover to the entire mould, the intermediate mobile part and lower part of which have the function, respectively, of moulding the suction cups having the shape of an hourglass or of bellows or of a cylinder directly onto the support made of breathable or hydrophilic and waterproof material around the various pins located at the desired distances in the lower part of the mould against which the intermediate mobile part is mechanically pressed during the moulding phase and from which, thanks to a series of springs, it is distanced after moulding thereby allowing the automatic and integral removal of the suction cups moulded in the shape of an open hourglass or of bellows or of a cylinder.

### Detailed description

Further features and advantages of the invention shall be better understood from the description of a preferred but not exclusive embodiment of the present application, illustrated by way of indicative but non-limiting example in the accompanying drawings in which:

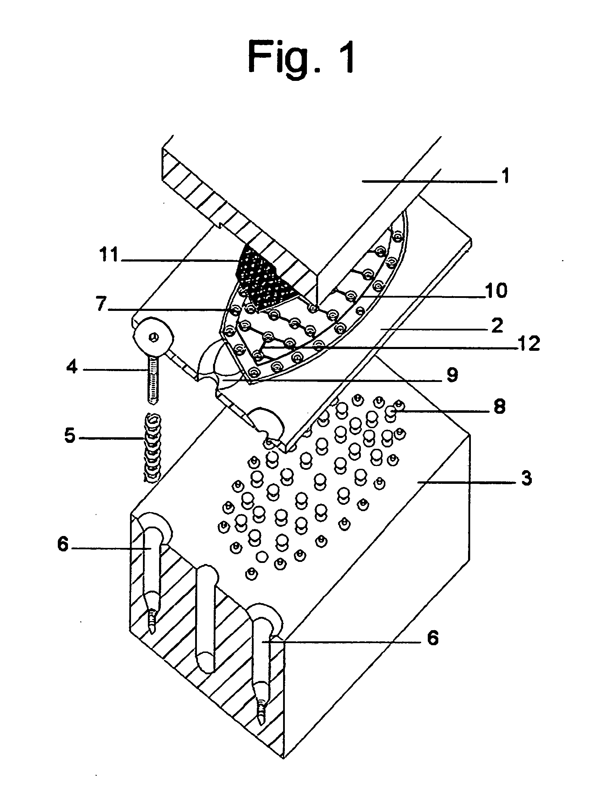

Fig.1 shows a cross-section from above of the mould that is the object of the present application;

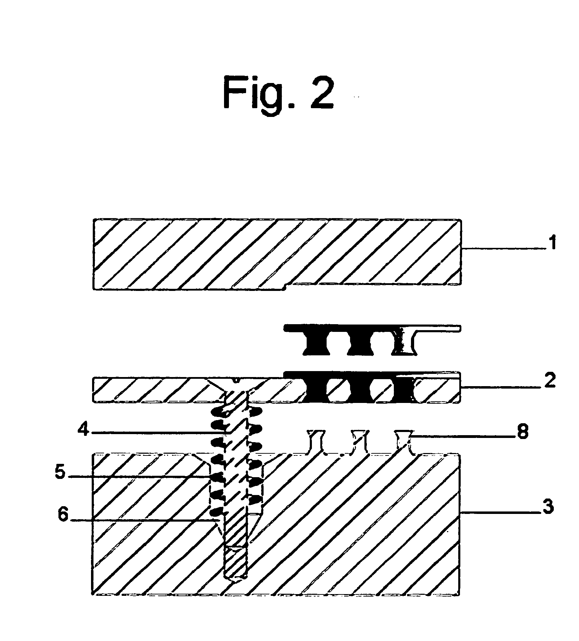

Fig. 2 shows a side cross-section of the mould with the intermediate part open;

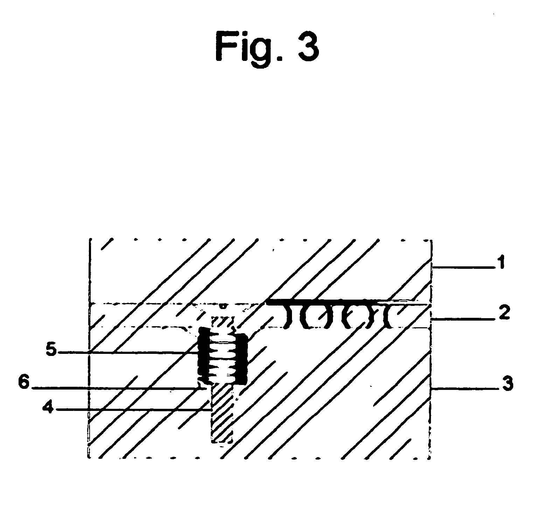

Fig. 3 shows a side cross-section of the mould with the intermediate part closed;

The invention that is the object of the present application is a mould composed of three sections, the upper part (1), the intermediate mobile part (2), the lower part (3). The intermediate mobile part (2) is detached from the lower part (3) of the mould and fastened to the same by means of a series of screws (4) fitted in specific seats (6) around which springs (5) are inserted to enable the intermediate mobile part (2) to close onto the lower part (3) due to mechanical pressure during the moulding phase through the infeeding of the thermoplastic material injected into the channel (9) and to return to its original position once moulding has been completed.

The thermoplastic material injected is fed into a series of grids (12) in the intermediate mobile part (2) so as to connect at the desired distance a number of holes (7) to an equivalent number of corresponding pins (8) in the shape of an hourglass or of bellows or of a cylinder located in the lower part (3) around which the suction cups are moulded directly onto the support made of hydrophilic or breathable material (11) placed beforehand on a perimeter line (10) of the upper area of the intermediate mobile part (2) of the mould.

In the resting position, the height of the intermediate mobile part (2) from the lower part (3) of the invention is more than proportional to the height of the pins (8) around which the suction cups having the shape of an open hourglass or of bellows or of a cylinder are moulded so that during the return movement the intermediate mobile part (2) can automatically disengage the suction cups leaving their moulded shapes intact.

The return movement of the intermediate mobile part (2) to its original position is determined by the joint functional combination of the relaxing of the mechanical pressure once moulding is completed and of the consequent lengthening of the springs (5) that push it upwards.

The materials and the dimensions of the above-described invention, illustrated in the accompanying drawings and later claimed, may be varied according to requirements.

## Claims

1. Mould with intermediate mobile surface for the direct moulding of a membrane as an accessory for shoe soles equipped with a series of suction cups preferably having the particular shape of an open hourglass or of bellows or of a cylinder moulded at a given distance one from the other onto a support made of breathable or hydrophilic and waterproff material, **characterised by** being divided into three parts, the upper part (1) of which acts as the cover of the mould, the intermediate mobile part (2) of which has the function of directly moulding the suction cups onto the previously positioned support made of hydrophilic or breathable and waterproof material (11), and the lower part (3) of which has the function of shaping the suction cups through the pressure moulding of the intermediate mobile part on the pins (8) located on the same from which they are automatically removed as a result of the upward movement of the intermediate mobile part determined by the joint functional combination of the relaxing of the mechanical pressure of the said intermediate mobile part of the mould once moulding has been completed and by its upward thrust due to the consequent lengthening of the springs (5) with which the mould is equipped.

2. Mould with intermediate mobile surface as claimed in claim 1 the intermediate mobile part (2) of which is **characterised by** being equipped with a vertical movement towards and from the lower part of the mould (3).

3. Mould with intermediate mobile surface as claimed in claims 1 and 2 **characterised by** the fact that the intermediate mobile part (2) is fixed to the lower part by means of a series of screws (4) located in specific seats around which the springs are fitted.

4. Mould with intermediate mobile surface as claimed in claims 1, 2 and 3 **characterised by** the fact that the height separating the intermediate mobile part (2) from the lower part (3) is more than proportional to that of the pins (8) located on the latter in order to ensure that the upward movement of the intermediate mobile part automatically disengages the suction cups having the shape of an open hourglass or of bellows or of a cylinder moulded around the pins (8) through the return movement to its original position.

5. Mould with intermediate mobile surface as claimed in claims 1, 2, 3 and 4 the intermediate mobile (2) art of which is **characterised by** having a number of holes (7) equivalent to the number of corresponding pins (8) located in the lower part of the mould in order to ensure that the suction cups having the shape of an open hourglass or of bellows or of a cylinder are moulded around them and at the desired distances.

6. Mould with intermediate mobile surface as claimed in claims 1, 2, 3, 4 and 5 the intermediate mobile part (2) of which is **characterised by** a series of grids (12) which enable the injected material to reach the moulding holes (7) of the suction cups, thereby preventing the entire hydrophilic or breathable and waterproof support onto which they are moulded from being covered by the material injected.

7. Mould as claimed in claims 1, 2, 3, 4, 5, 6 the intermediate mobile part (2) of which is **characterised by** a perimeter line on which is inserted the support made of hydrophilic or breathable and waterproof material onto which the suction cups having the shape of an open hourglass or of bellows or of a cylinder are then moulded in flexible thermoplastic material.

8. Mould with intermediate mobile surface as claimed in claims 1, 2, 3, 4, 5, 6, 7 **characterised by** a system of screws (4) that secures the intermediate mobile part to the lower part at a distance that is more than proportional to the length of the moulding pins of the moulded shapes of the suction cups located in the lower part of the invention.

9. Mould with intermediate mobile surface as claimed in claims 1, 2, 3, 4, 5, 6, 7, 8 **characterised by** a system of springs (5) located in specific spaces (6) in the lower part of the mould which during the moulding phase brings the intermediate mobile into contact with the lower part through mechanical pressure and once moulding has been completed enables it to return to its original position so as to determine the easy and automatic removal of the suction cups having the shape of an open hourglass or of bellows or of a cylinder from the pins located on the lower part around which they have been moulded.

## Patentansprüche

1. Form mit beweglicher Zwischenfläche zum direkten Formen einer Membran als Zubehör für Schuhsohlen, ausgestattet mit einer Reihe an Saugnäpfen, vorzugsweise in Form einer offenen Sanduhr oder eines Balgs oder Zylinders, geformt in einem bestimmten Abstand zueinander auf einer Unterlage aus atmungsaktivem oder hydrophilen und wasserfesten Material, **dadurch gekennzeichnet, dass** sie in drei Flächen gegliedert ist, von denen die obere Fläche (1) als Abdeckung der Form wirkt, die bewegliche Zwischenfläche (2) die Funktion des direkten Vergießens der Saugnäpfe mit der zuvor ausgerichteten Unterlage aus hydrophilem oder atmungsaktivem und wasserfestem Material (11) und die untere Fläche (3) die Funktion des Formens der Saugnäpfe durch Druckpressen der beweglichen Zwischenfläche auf die Stifte (8) erfüllt, die sich auf ihr befinden. Von dort werden sie infolge der Aufwärtsbewegung der beweglichen Zwischenfläche, ausgelöst durch die funktionale Verbindung zwischen dem Nachlassen des mechanischen Drucks der beweglichen Zwischenfläche der Form nach Beendigung des Formvorgangs und dem Aufwärtsschub infolge der beständigen Ausdehnung der Federn (5), mit denen die Form ausgestattet ist, automatisch entfernt.

2. Form mit beweglicher Zwischenfläche nach Patentanspruch 1, wobei die bewegliche Zwischenfläche (2) **dadurch gekennzeichnet ist, dass** sie eine vertikale Bewegung gegen und von der unteren Fläche der Form (3) ausführt.

3. Form mit beweglicher Zwischenfläche nach Patentansprüchen 1 und 2, **dadurch gekennzeichnet, dass** die bewegliche Zwischenfläche (2) an die untere Fläche durch eine Reihe an Schrauben (4) befestigt ist, die sich in besonderen Auflagern befinden, um welche die Federn angeordnet sind.

4. Form mit beweglicher Zwischenfläche nach Patentansprüchen 1, 2 und 3, **dadurch gekennzeichnet, dass** die Höhe zwischen der beweglichen Zwischenfläche (2) und der unteren Fläche (3) verhältnismäßig größer ist als die der Stifte (8) auf der unteren Fläche, sodass sichergestellt ist, dass die Aufwärtsbewegung der beweglichen Zwischenfläche automatisch die Saugnäpfe in Form einer offenen Sanduhr oder eines Balgs oder Zylinders, die um die Stifte (8) geformt werden, durch die Rückkehrbewegung in die ursprüngliche Position löst.

5. Form mit beweglicher Zwischenfläche nach Patentansprüchen 1, 2, 3 und 4, wobei die bewegliche Zwischenfläche (2) **dadurch gekennzeichnet ist, dass** sie eine Anzahl an Löchern (7) aufweist, die der Anzahl an Stiften (8) auf der unteren Fläche der Form entspricht, sodass sichergestellt ist, dass die Saugnäpfe in Form einer offenen Sanduhr oder eines Balgs oder Zylinders im gewünschten Abstand um sie geformt werden.

6. Form mit beweglicher Zwischenfläche nach Patentansprüchen 1, 2, 3, 4 und 5, wobei die bewegliche Zwischenfläche (2) **dadurch gekennzeichnet ist, dass** sie eine Reihe an Rastern (12) aufweist, welche es dem eingespritzten Material ermöglichen, die Formlöcher (7) der Saugnäpfe zu erreichen, und dabei verhindern, dass die gesamte hydrophile oder atmungsaktive und wasserfeste Unterlage, mit der sie vergossen werden, von dem eingespritzten Material bedeckt wird.

7. Form nach Patentansprüchen 1, 2, 3, 4, 5 und 6, wobei die bewegliche Zwischenfläche (2) **dadurch gekennzeichnet ist, dass** sie eine Umfangslinie aufweist, auf welche die Unterlage aus hydrophilem oder atmungsaktivem und wasserfestem Material eingesetzt wird, mit der anschließend die Saugnäpfe in Form einer offenen Sanduhr oder eines Balgs oder Zylinders aus flexiblem thermoplastischen Material vergossen werden.

8. Form mit beweglicher Zwischenfläche nach Patentansprüchen 1, 2, 3, 4, 5, 6 und 7, **dadurch gekennzeichnet, dass** ein Schraubensystem (4) die bewegliche Zwischenfläche sicher in einem Abstand mit der unteren Fläche verbindet, der verhältnismäßig größer ist als die Länge der Formstifte der mit der unteren Fläche der Erfindung vergossenen Formen der Saugnäpfe.

9. Form mit beweglicher Zwischenfläche nach Patentansprüchen 1, 2, 3, 4, 5, 6, 7 und 8, **dadurch gekennzeichnet, dass** ein Federsystem (5) in entsprechenden Auflagern (6) auf der unteren Fläche der Form angebracht ist, das in der Formphase die bewegliche Zwischenfläche durch mechanischen Druck in Kontakt mit der unteren Fläche bringt und dieser nach dem Formvorgang ermöglicht, in ihre ursprüngliche Position zurückzukehren, sodass die Saugnäpfe in Form einer offenen Sanduhr oder eines Balgs oder Zylinders leicht und automatisch von den Stiften auf der unteren Fläche entfernt werden, um die sie geformt wurden.

## Revendications

1. Moule à surface intermédiaire mobile pour le moulage direct d'une membrane en tant qu'accessoire pour semelles de chaussures, équipé d'une série de ventouses ayant de préférence la forme particulière d'un sablier ouvert, d'un soufflet ou d'un cylindre, moulées les unes par rapport aux autres à une distance donnée sur un support constitué de matériau respirant ou hydrophile et imperméable, qui se distingue par le fait qu'il est divisé en trois parties : la partie supérieure (1) servant de couvercle au moule, la partie intermédiaire mobile (2) ayant pour fonction de mouler directement les ventouses sur le support positionné au préalable, constitué de matériau hydrophile ou respirant et imperméable (11), et la partie inférieure (3) ayant la fonction de modeler les ventouses grâce à la pression de moulage de la partie mobile intermédiaire sur les broches (8) situées sur celle-ci, de laquelle elles sont automatiquement extraites suite au mouvement vers le haut de la partie mobile intermédiaire provoqué par la combinaison fonctionnelle du relâchement de la pression mécanique de cette partie mobile intermédiaire du moule, une fois le moulage terminé, et de la poussée vers le haut suite à l'allongement des ressorts (5) dont le moule est équipé.

2. Moule à surface intermédiaire mobile comme revendiqué dans la revendication 1, dont la partie intermédiaire mobile (2) se distingue par un mouvement vertical vers et depuis la partie inférieure du moule (3).

3. Moule à surface intermédiaire mobile comme revendiqué dans les revendications 1 et 2 qui se distingue par le fait que la partie intermédiaire mobile (2) est fixée à la partie inférieure par une série de vis (4) situées dans des logements spécifiques autour desquels sont montés les ressorts.

4. Moule à surface intermédiaire mobile comme revendiqué dans les revendications 1, 2 et 3 qui se distingue par le fait que la hauteur qui sépare la partie intermédiaire mobile (2) de la partie inférieure (3) est plus que proportionnelle à celle des broches (8) situées sur ce dernier afin de garantir que le mouvement vers le haut de la partie intermédiaire mobile désengage automatiquement les ventouses ayant la forme d'un sablier ouvert, d'un soufflet ou d'un cylindre moulé autour des broches (8) par le mouvement de retour dans sa position d'origine.

5. Moule à surface intermédiaire mobile comme revendiqué dans les revendications 1, 2, 3 et 4, dont la partie intermédiaire mobile (2) se distingue par la présence d'un nombre de trous (7) équivalent au nombre de broches (8) correspondantes situées sur le partie inférieure du moule afin de garantir que les ventouses ayant la forme d'un sablier ouvert, d'un soufflet ou d'un cylindre soient moulées autour de ceux-ci et à la distance désirée.

6. Moule à surface intermédiaire mobile comme revendiqué dans les revendications 1, 2, 3, 4 et 5, dont la partie intermédiaire mobile (2) se distingue par la présence d'une série de grilles (12) qui permettent au matériau injecté d'atteindre les trous de moulage (7) des ventouses, empêchant ainsi le support hydrophile ou respirant et imperméable sur lequel elles sont moulées d'être recouvert par le matériau injecté.

7. Moule mobile comme revendiqué dans les revendications 1, 2, 3, 4, 5 et 6, dont la partie intermédiaire mobile (2) se distingue par la présence d'une ligne de périmètre sur laquelle est inséré le support constitué de matériau hydrophile ou respirant et imperméable sur lequel les ventouses ayant la forme d'un sablier ouvert, d'un soufflet ou d'un cylindre sont ensuite moulées dans un matériau thermoplastique souple.

8. Moule à surface intermédiaire mobile comme revendiqué dans les revendications 1, 2, 3, 4, 5, 6 et 7 qui se distingue par un système de vis (4) qui fixent la partie mobile intermédiaire à la partie inférieure à une distance plus que proportionnelle à la longueur des broches de moulage des formes moulées des ventouses situées sur la partie inférieure de l'invention.

9. Moule à surface intermédiaire mobile comme revendiqué dans les revendications 1, 2, 3, 4, 5, 6, 7 et 8 qui se distingue par un système de ressorts (5) situés dans des espaces spécifiques (6) de la partie inférieure du moule qui, pendant la phase de moulage, met la partie mobile intermédiaire en contact avec la partie inférieure sous l'effet de la pression mécanique et, une fois le moulage terminé, lui permet de retourner dans sa position d'origine pour pouvoir enlever facilement et automatiquement les ventouses, ayant la forme d'un sablier ouvert, d'un soufflet ou d'un cylindre, des broches situées sur la partie inférieure autour desquelles elles ont été moulées.
